# EUROPEAN PATENT APPLICATION

(11) **EP 3 945 010 A1**
(43) Date of publication of application: **02.02.2022**
(21) Application number: 21188824.3
(22) Date of filing: 30.07.2021
(51) Int. Cl.: B62K 5/10, B62K 7/04, B62K 5/08, B62K 5/02

(54) **FRONT TWO-WHEELED VEHICLE**

(30) Priority: 30.07.2020 JP 2020129765
(71) Applicant: Kawasaki Jukogyo Kabushiki Kaisha, Kobe-shi, Hyogo 650-8670 (JP)
(72) Inventor: IWAMOTO, Taro, Hyogo, 6508670 (JP); NAKAJIMA, Takeshi, Hyogo, 6508670 (JP); ISHII, Hiroshi, Hyogo, 6508670 (JP); NAGASAKA, Kazuya, Hyogo, 6508670 (JP); INABA, Taichi, Hyogo, 6508670 (JP)
(74) Representative: Qip Patentanwälte Dr. Kuehn & Partner mbB

(57) **Abstract**

[Problem to be solved] To improve the running stability of a front two-wheeled vehicle.

[Solution] A first front wheel is located on a first side in a vehicle width direction, and a second front wheel is located on a second side in the vehicle width direction. The lean mechanism leans the first front wheel and the second front wheel in a front view in conjunction with the vehicle body leaning in the front view. By operating the handle, the first front wheel turns around a first turning shaft and the second front wheel turns around a second turning shaft. A steering transmission shaft rotates in conjunction with an operation of the handle. The frame of the vehicle body includes a front cylinder part that supports the steering transmission shaft. In the state where the vehicle body is upright, a lower end of the front cylinder part is lower than axles of the first front wheel and the second front wheel. The front two-wheeled vehicle includes a steering rotation section that is at least partially located below the lower end of the front cylinder part and rotates integrally with the steering transmission shaft. The steering rotation section is connected to the first front wheel and the second front wheel via a steering link mechanism.

## Description

### TECHNICAL FIELD

The present invention relates to a configuration of a front two-wheeled vehicle.

### BACKGROUND ART

A front two-wheeled vehicle is disclosed, for example, in PTL 1. In the front two-wheeled type three-wheeled bicycle of PTL 1, a steering plate is fixed to the lower end of a steering shaft, and the steering plate is configured to move integrally with the rotation of a handle.

### PRIOR-ART DOCUMENTS

### PATENT DOCUMENTS

PTL 1: Japanese Unexamined Patent Application Publication No. 2001-010577

### SUMMARY OF THE INVENTION

### PROBLEMS TO BE SOLVED BY THE INVENTION

In a vehicle having two front wheels such as that of PTL 1, it has been needed to improve running stability.

The present invention is made in view of the circumstances described above, and an object of the present invention is to provide a front two-wheeled vehicle which can improve running stability.

### MEANS FOR SOLVING THE PROBLEMS

The problem to be solved by the present invention is as described above, and the means for solving this problem and the effects thereof are described below.

According to an aspect of the present invention, there is provided a front two-wheeled vehicle having the following configuration. That is, the front two-wheeled vehicle includes a vehicle body, a first front wheel, a second front wheel, a lean mechanism, a handle, a lean brake, and a steering transmission shaft. The vehicle body includes a frame. The first front wheel is located on a first side in a vehicle width direction. The second front wheel is located on a second side which is opposite to the first side in the vehicle width direction. The lean mechanism leans the first front wheel and the second front wheel in a front view in conjunction with the vehicle body leaning in the front view. The handle is operated to turn the first front wheel around the first turning shaft located on the first side and to turn the second front wheel around the second turning shaft located on the second side. The steering transmission shaft rotates in conjunction with an operation of the handle. The frame includes a front cylinder part that supports the steering transmission shaft. In a state where the vehicle body is upright, a lower end of the front cylinder part is disposed lower than axles of the first front wheel and the second front wheel. The front two-wheeled vehicle includes a steering rotation section that is at least partially located below the lower end of the front cylinder part and rotates integrally with the steering transmission shaft. The steering rotation section is connected to the first front wheel and the second front wheel via a steering link mechanism.

This allows the front cylinder part to be positioned low in the front two-wheeled vehicle, thereby lowering the center of gravity of the frame. As a result, the center of gravity of the vehicle body can be lowered and the stability of the front two-wheeled vehicle can be improved.

### EFFECTS OF THE INVENTION

According to the present invention, it is possible to provide a front two-wheeled vehicle capable of improving running stability.

### BRIEF DESCRIPTION OF THE DRAWINGS

FIG. 1 is a diagonal view showing the overall configuration of a three-wheeled bicycle in accordance with an embodiment of the present invention.
FIG. 2 is a side view of a three-wheeled bicycle.
FIG. 3 is a diagonal view of a front part of the three-wheeled bicycle.
FIG. 4 is a plan view illustrating the position of the center of gravity of the vehicle body.
FIG. 5 is a front view of the three-wheeled bicycle.
FIG. 6 is an enlarged front view showing the vehicle body in an upright posture.
FIG. 7 is a diagonal view showing a lean mechanism and a lean brake.
FIG. 8 is an enlarged front view showing a state in which the vehicle body is inclined when viewed from the front.
FIG. 9 is a diagonal view of the front part of the three-wheeled bicycle showing a state in which the handle is turned to the left.

### EMBODIMENT FOR CARRYING OUT THE INVENTION

Next, an embodiment of the present invention will be described with reference to the drawings. In the following description, the left-right direction of a three-wheeled bicycle 1 is defined by the direction seen from a driver riding the three-wheeled bicycle (front two-wheeled vehicle) 1. Accordingly, when the posture of the three-wheeled bicycle 1 is upright, the front-rear direction corresponds to the vehicle length direction and the left-right direction corresponds to the vehicle width direction. In addition, the up-down direction (vertical direction) corresponds to the height direction.

In this specification, when one member is "attached" to another member, it includes cases of a direct attachment as well as an indirect attachment through another member. The same applies to "fixed", "supported", and "connected".

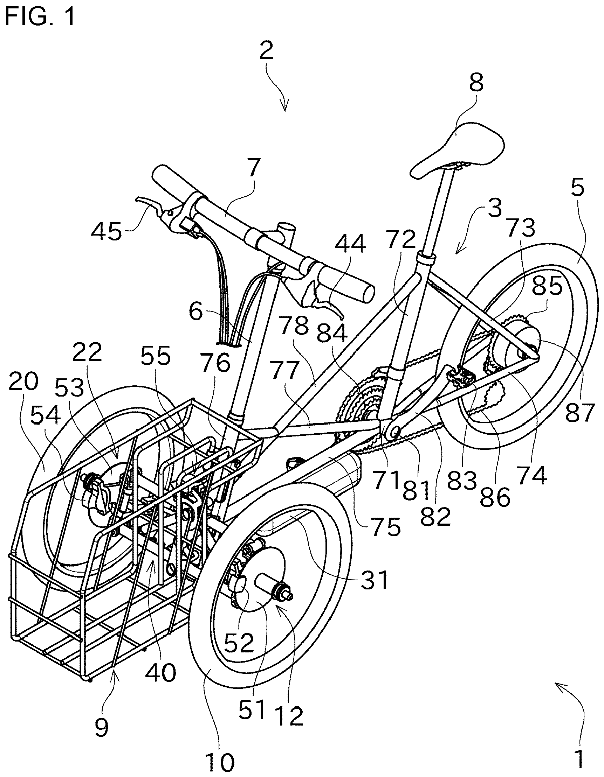

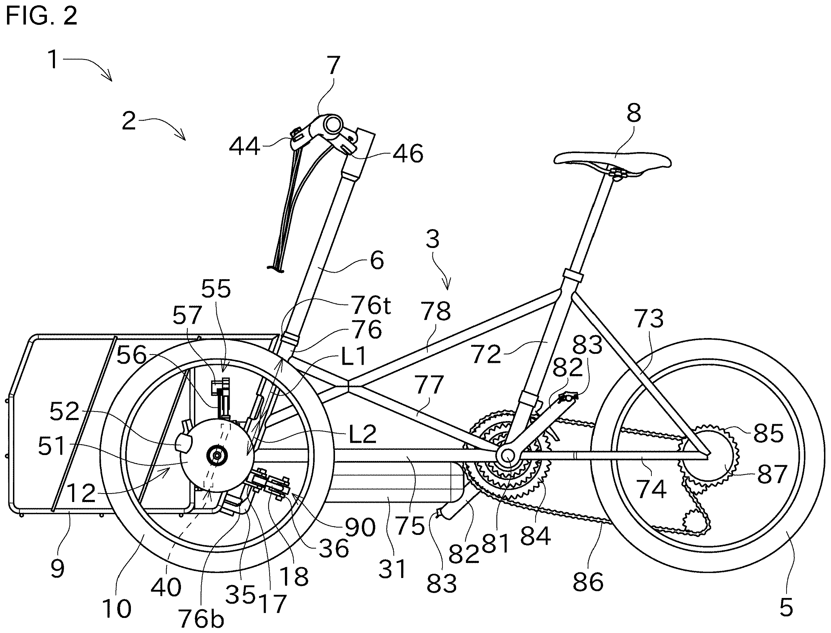

Initially, an overview of a three-wheeled bicycle (front two-wheeled vehicle) 1 will be described with reference to FIGS. 1 and 2. The three-wheeled bicycle 1 includes two front wheels 10, 20.

The three-wheeled bicycle 1 includes a vehicle body 2, a left front wheel (first front wheel) 10, a right front wheel (second front wheel) 20, and a rear wheel 5. The vehicle body 2 supports the left front wheel 10, the right front wheel 20, and the rear wheel 5. The vehicle body 2 includes a frame 3 that serves as a framework of the three-wheeled bicycle 1.

The three-wheeled bicycle 1 is a kind of lean type vehicle. A lean type vehicle means a vehicle in which the posture of the vehicle body 2 with respect to the road surface can be changed, and in which the vehicle body 2 is an inclined state with respect to the road surface as the bicycle is turned by steering. In the following, a state in which a handle 7 for steering (described below) is operated in the neutral position and the vehicle body 2 is upright against the road surface (in other words, the state of normal straight running) may be referred to as a reference state. In the following, unless otherwise explained, the description will be given assuming the reference state.

The left front wheel 10 is disposed to the left side (first side) of the center in the vehicle width direction. The right front wheel 20 is disposed to the right side (second side) of the center in the vehicle width direction. The left front wheel 10 and the right front wheel 20 are supported against the frame 3 by a lean mechanism 40. Details of the lean mechanism 40 will be described later.

The rear wheel 5 is disposed in the center of the vehicle width direction and is rotatably supported at the rear end of the frame 3.

The frame 3 will now be described. The frame 3 is disposed in the center of the width direction of the three-wheeled bicycle 1. The frame 3 is made of a plurality of frame members connected by welding or the like.

The frame 3 has a bottom cylinder part (crank axle support part) 71, a seat tube (seat support part) 72, seat stays 73, chain stays 74, a down tube (first member) 75, a front cylinder part 76, a first cross tube (second member) 77, a second cross tube (third member) 78.

As used herein, "cylinder part" means a part in which a bearing rotatably supporting a shaft body is interposed and which is formed in a cylindrical shape. The term "tube" means a part formed in a solid or hollow shape.

The bottom cylinder part 71 is a member that extends in a straight line in the vehicle width direction. The bottom cylinder part 71 is formed in a cylindrical shape that is oriented in the vehicle width direction. Openings are formed on both sides of the bottom cylinder part 71 in the vehicle width direction. This bottom cylinder part 71 may be referred to as a bottom bracket shell. A crank axle 81 is rotatably supported in the bottom cylinder part 71. The crank axle 81 is a component that connects the left and right cranks 82 to each other and rotates integrally with the cranks 82. The crank axle 81 is disposed so as to be oriented in the vehicle width direction. A pair of left and right pedals 83 are supported on both ends of the crank axle 81 via the cranks 82, respectively.

A front sprocket 84 is supported in the vicinity of the bottom cylinder part 71. The front sprocket 84 rotates integrally with the cranks 82 and the crank axle 81.

The seat tube 72 is formed to extend in a straight line rearwardly and upwardly from the bottom cylinder part 71. A seat 8 is fixed to the upper part of the seat tube 72 via a bar-shaped seat post.

The driver can straddle the seat 8 and place his or her feet on the left and right pedals 83. Thus, the three-wheeled bicycle 1 is a type of vehicle in which the driver rides astride the seat 8 (saddle-type vehicle).

The seat stays 73 are formed to extend rearwardly and downwardly from the upper part of the seat tube 72.

The chain stays 74 are formed to extend rearwardly almost horizontally from the bottom cylinder part 71.

Each of the seat stays 73 and the chain stays 74 are arranged in pairs so as to sandwich the rear wheel 5 on the left and right sides. At each of the left side and right side, the rear ends of the seat stay 73 and the chain stay 74 are connected to each other, and the rear wheel 5 is rotatably supported at this part.

A rear sprocket 85 is attached to the rear wheel 5. A chain 86 is wound between the front sprocket 84 and the rear sprocket 85. As a result of the above, the force with which the driver steps on the pedals 83 with his feet is transmitted to the rear wheel 5, allowing the rear wheel 5 to be driven by human power.

An electric motor 87 is attached to the axle part of the rear wheel 5. By driving the electric motor 87, the rear wheel 5 can be assisted to be driven by human power. The electric motor 87 may be used as a drive source to make the three-wheeled bicycle 1 self-propelled without human power. The electric motor 87 may be used as a generator.

The down tube 75 is a straight part that is oriented approximately horizontally. The down tube 75 is formed to extend in a straight line forwardly from the bottom cylinder part 71. The down tube 75 is connected to the front cylinder part 76 disposed at the front end of the frame 3.

The down tube 75 extends in a front-rear direction so as to connect the bottom cylinder part 71 and the front cylinder part 76. In the present embodiment, in a side view, the axis of the down tube 75 is disposed on the same axis as the axis of the chain stay 74. In the present embodiment, the axis of the down tube 75, the axis of the front wheel 10, and the axis of the crank axle 81 are arranged to be included in a common horizontal plane. This allows the structure in which the load can be easily transmitted from the rear wheel 5 to the front and the load can be easily transmitted from the front wheels 10 and 20 to the rear.

The front cylinder part 76 is an elongated cylindrical part that extends in a straight line in the up-down direction. The front cylinder part 76 is disposed so as to be in a slightly backwardly inclined posture. That is, the front cylinder part 76 extends in a rearwardly inclined manner as it proceeds upwardly from the lower end. In the present embodiment, the front cylinder part 76 extends parallel to the seat tube 72. The angle of the front cylinder part 76 in a side view is arbitrary and, for example, can be directed vertically. The front cylinder part 76 is located rearward to the axles of the left and right front wheels 10, 20.

The down tube 75 is connected to the lower part of the front cylinder part 76. However, the location where the down tube 75 connects to the front cylinder part 76 is not at the lowest end of the front cylinder part 76. In other words, the front cylinder part 76 has a lower part that extends downwardly with respect to the connection position with the down tube 75, and an upper part portion that extends upwardly with respect to the connection position.

The front cylinder part 76 is formed in a hollow shape. Openings are formed at upper and lower ends of the front cylinder part 76. A lower part of a steering transmission shaft 6 is inserted into the front cylinder part 76. The steering transmission shaft 6 is rotatably supported by the front cylinder part 76.

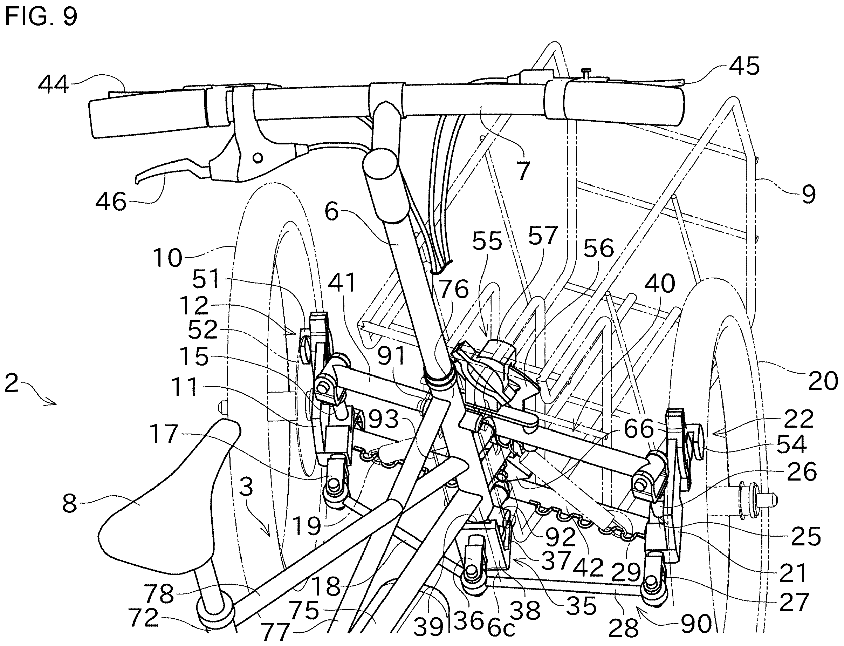

The front cylinder part 76 is located between the left front wheel 10 and the right front wheel 20. A luggage basket 9 is fixed to the front cylinder part 76. The luggage basket 9 is disposed in front of the frame 3. The front cylinder part 76 has an upper support position for supporting the luggage basket 9 above the connection with the down tube 75, and a lower support position for supporting the luggage basket 9 below the connection with the down tube 75. As will be described in detail later, the upper support position corresponds to first bosses 91 shown in FIG. 9, and the lower support position corresponds to second bosses 92. As a result, the luggage basket 9 can be stably supported.

As shown in FIG. 2, in the state where the vehicle body 2 is upright, a lower end 76b of the front cylinder part 76 is lower than the height of the axles of the front wheels 10 and 20. An upper end 76t of the front cylinder part 76 is at about the same height as the upper ends of the front wheels 10, 20. The upper end 76t of the front cylinder part 76 is lower than the upper end of the seat tube 72. Thus, by effectively utilizing the space between the left and right front wheels 10, 20 and arranging the front cylinder part 76 low, a low center of gravity of the frame 3 can be achieved.

A handle 7 is attached to the part where the steering transmission shaft 6 extends upwardly from the upper end 76t of the front cylinder part 76. The handle 7 is formed in a bar shape (bar handle), and the center part in the left-right direction thereof is fixed to the upper end of the steering transmission shaft 6. The driver can grasp the handle 7 with his hand and operate it for steering. The lower part of the steering transmission shaft 6 is disposed projecting downwardly from the lower end of the front cylinder part 76. The steering transmission shaft 6 is rotated about the axis of the front cylinder part 76 with respect to the front cylinder part 76 by operation of the driver to rotate the handle 7.

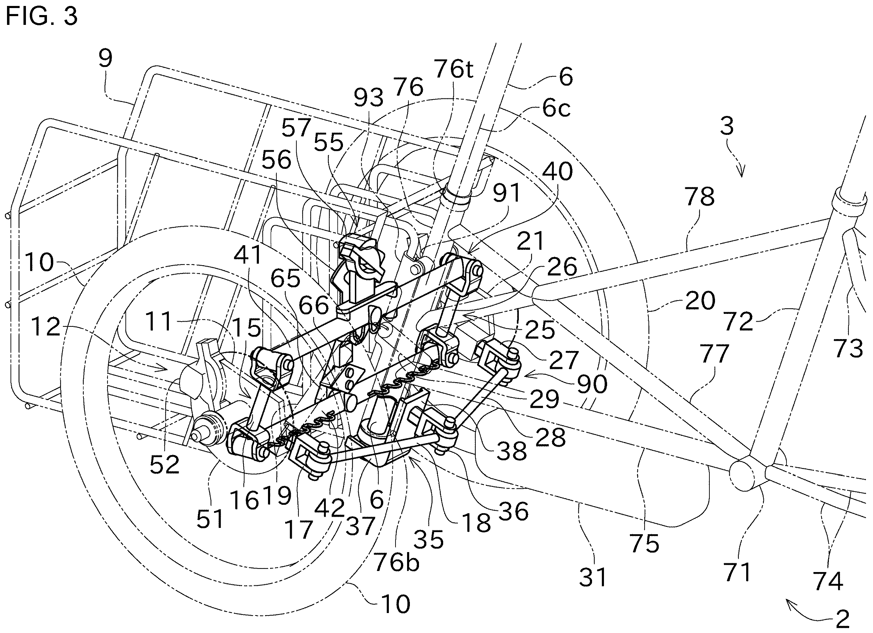

As shown in FIG. 3, a steering bracket (steering rotation section) 35 is fixed to the lower end of the steering transmission shaft 6. When the handle 7 is rotated, the steering bracket 35 rotates integrally with the steering transmission shaft 6.

A steering drive arm 36 is attached to the rear of the steering bracket 35. The steering drive arm 36 is arranged to project rearwardly from the steering bracket 35.

The steering drive arm 36 constitutes a steering link mechanism 90 shown in FIG. 3 and elsewhere. The steering link mechanism 90 can turn the left front wheel 10 and the right front wheel 20 in conjunction with the rotation of the steering transmission shaft 6 (the steering bracket 35). The detailed configuration of the steering link mechanism 90 will be described later.

The first cross tube 77 is a straight member that connects the bottom cylinder part 71 and the front cylinder part 76 in the same manner as the down tube 75. The first cross tube 77 extends forward and upward from the bottom cylinder part 71 and connects to the upper part of the front cylinder part 76. The first cross tube 77, the down tube 75, and the front cylinder part 76 form a triangular frame in a side view.

In the present embodiment, in the aforementioned reference state, the connection position of the first cross tube 77 and the front cylinder part 76 is located above the rim to which the rubber tires of the front wheels 10 and 20 are mounted. In the reference state, in a side view, the first cross tube extends along a tangent line which is tangent to the front wheels 10, 20. However, the arrangement of the first cross tube 77 is not limited.

The second cross tube 78 is a straight member that is disposed in a different orientation from the first cross tube 77 in a side view. The second cross tube 78 extends forward and downward from the upper part of the seat tube 72 and connects to a vertically intermediate part of the front cylinder part 76. The location where the second cross tube 78 connects to the front cylinder part 76 is higher than the location where the down tube 75 connects to the front cylinder part 76 and lower than the location where the first cross tube 77 connects to the front cylinder part 76.

The second cross tube 78 is connected to the seat tube 72 at a position above the connection position between the first cross tube 77 and the front cylinder part 76. The connection position between the second cross tube 78 and the front cylinder part 76 is located below the connection position between the first cross tube 77 and the front cylinder part 76 and located above the connection position between the down tube 75 and the front cylinder part 76. In this embodiment, as shown in FIG. 2, with respect to the front cylinder part 76, the distance L1 between the connection position of the second cross tube 78 and the connection position of the first cross tube 77 is greater than the distance L2 between the connection position of the second cross tube 78 and the connection position of the down tube 75 (L1 > L2). This allows the triangle to be easily formed using the second cross tube 78, the down tube 75, and the front cylinder part 76. The height of the connection position between the second cross tube 78 and the seat tube 72 is the same as the height of the connection position between the seat stay 73 and the seat tube 72. This allows a load distribution effect to be obtained.

The first cross tube 77 and the second cross tube 78 are arranged to intersect each other and are connected to each other at this intersection. The first cross tube 77, the down tube 75, and the front cylinder part 76 form a triangular frame. The second cross tube 78, the down tube 75, and the seat tube 72 form a triangular frame. This realizes increased rigidity by the truss structure.

Thus, in the present embodiment, the bottom cylinder part 71 and the front cylinder part 76 are connected to each other by the down tube 75 which is horizontal-shaped. The down tube 75 is positioned at approximately the same height as the bottom cylinder part 71. Accordingly, the center of gravity of the frame 3 can be lowered, and the stability of the vehicle body 2 can be secured.

The first cross tube 77 and the second cross tube 78 are arranged as X-shape and disposed above the down tube 75. The down tube 75, the first cross tube 77, and the second cross tube 78 provide a rigid structure that connects the bottom cylinder part 71 or the seat tube 72 and the front cylinder part 76 to each other. Accordingly, the mechanical strength is effectively improved by the connected structure forming a plurality of triangles. In addition, since the position of the part where the first cross tube 77 and the second cross tube 78 intersect in an X-shape can be lowered, the center of gravity of the frame 3 can be further lowered and the driver can easily get on and off the vehicle.

A battery 31 is fixed to the lower part of the down tube 75 in a suspended manner. This battery 31 supplies electric power to the electric motor 87.

The battery 31 is disposed between the bottom cylinder part 71 and the front cylinder part 76. In this example, the battery 31 is formed in a box shape having a longitudinal direction. The center of the battery 31 in the vehicle width direction is disposed along the center of the vehicle body 2 in the vehicle width direction. In this manner, the center of gravity of the battery 31 is positioned at the center of the vehicle body 2 in the vehicle width direction and below the down tube 75 and the crank axle 81. As a result, a low center of gravity can be achieved.

The battery 31 is a heavy object. By mounting the battery 31 to the down tube 75, a lower center of gravity of the vehicle body 2 can be achieved. In place of or in addition to the battery 31, a control computer (controller, not shown) for controlling the electric motor 87 may be mounted to the down tube 75.

The low center of gravity of the vehicle body 2 allows the vehicle body 2 to be well stabilized even if a power source such as the electric motor 87 is provided and even if the vehicle is loaded with luggage. Since the center of gravity can be brought closer to the road surface on which the front wheels 10, 20 and the rear wheel 5 touch the ground, the moment required to lean the vehicle body 2 can be reduced. Accordingly, the vehicle body 2 can be configured to be easily leaned.

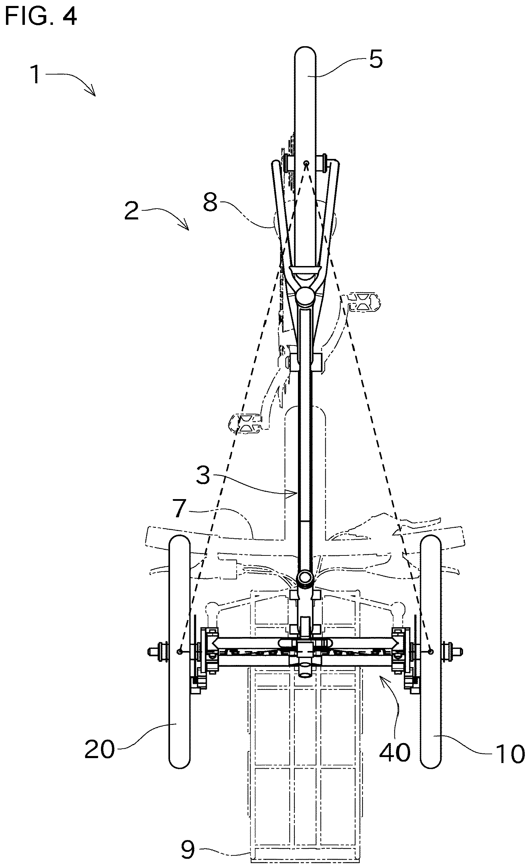

In the present embodiment, the center of gravity of the vehicle body 2 is laid out so that the center of gravity of the vehicle body 2 is inside a triangle having the rear wheel 5, the left front wheel 10, and the right front wheel 20 as vertices in the plan view shown in FIG. 4. The heavy objects such as the front cylinder part 76, the down tube 75, the battery 31, and the like are placed at the bottom. Therefore, even if the vehicle body 2 leans to the left or right against the road surface, the amount of movement of the center of gravity to the left or right can be reduced and the center of gravity does not go outside the triangle. As a result, the stability of the vehicle body 2 can be secured.

In the present embodiment, the battery 31 is located, with respect to the vehicle width direction, more inwardly in the vehicle width direction than the surfaces facing inwardly in the vehicle width direction of the left and right cranks 82. In a side view, the rear end of the battery 31 is located rearward to the front end of the rotation path of the pedals 83. In a side view, the front end of the battery 31 is located forward of the rear ends of the left and right front wheels 10, 20. The battery 31 is disposed parallel to the down tube 75 so that the longitudinal direction of the battery 31 is along the axis of the down tube 75. The lower end surface of the battery 31 is located above the lower end of the steering bracket 35 described later.

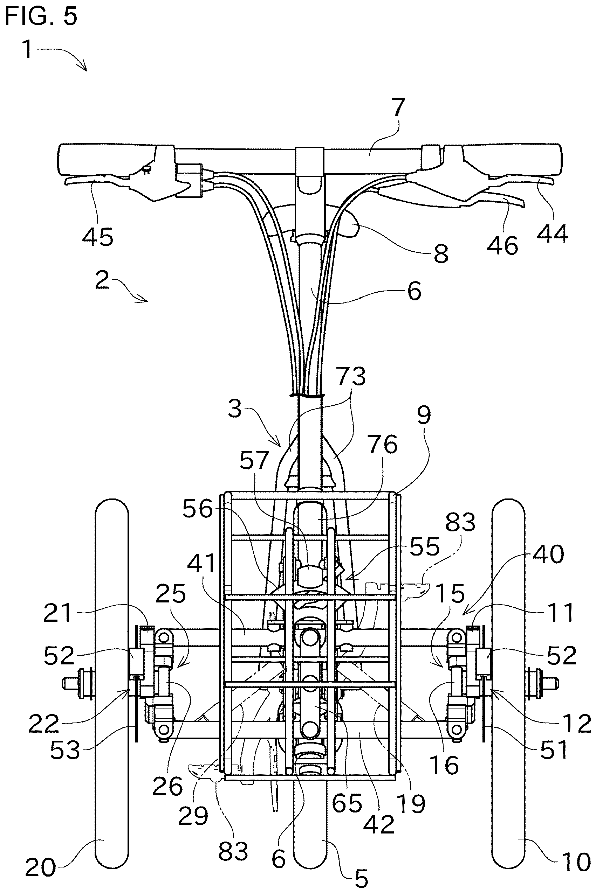

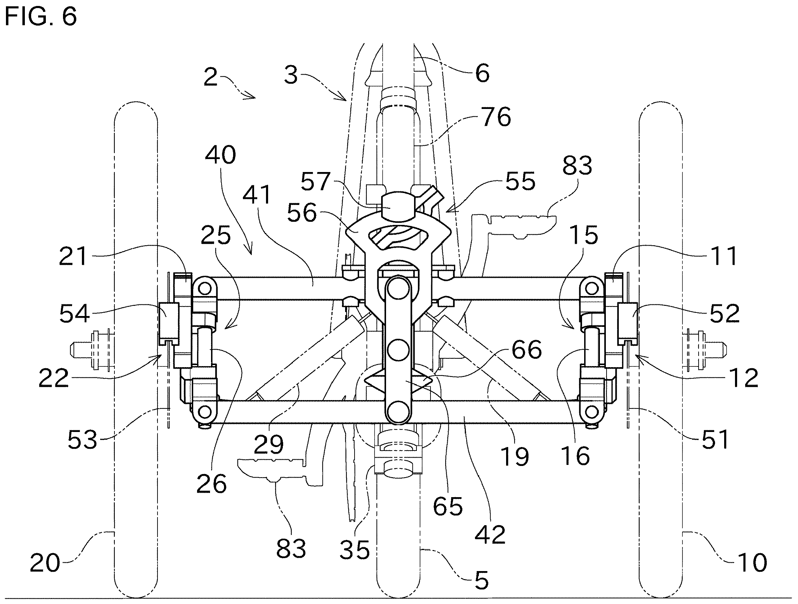

As shown in FIGS. 3, 5, and 6, the left front wheel 10 is rotatably supported around a rotation axis which is set in the left knuckle member (first knuckle member) 11. Accordingly, the left knuckle member 11 is a support for the left front wheel 10. The posture of the left knuckle member 11 is set so that the rotation axis which is set in the left knuckle member 11 (in other words, the axle of the left front wheel 10) extends in the vehicle width direction in the reference state. FIGS. 5 and 6 are front views. In FIG. 6 which is an enlarged view, the luggage basket 9 provided by the three-wheeled bicycle 1 is omitted. The left knuckle member 11 is disposed in the inner side of the vehicle width direction than the left front wheel 10.

A left brake 12 is disposed on the left front wheel 10. The left brake 12 is disposed on a side closer to the center of the vehicle width direction than the left front wheel 10.

The left brake 12 includes a left brake disc 51 and a left brake caliper (first brake caliper, brake caliper) 52. The left brake disc 51 is fixed to the left front wheel 10. The left brake caliper 52 is fixed to a front part of the left knuckle member 11. The left brake 12 makes the left brake caliper 52 clasp the left brake disc 51 which rotates integrally with the left front wheel 10 so as to brake the left front wheel 10.

The left knuckle member 11 is attached to a left link 15 provided by the lean mechanism 40 described below. The left knuckle member 11 is rotatably supported on a left kingpin shaft (first turning shaft) 16 that the left link 15 has. Accordingly, the left front wheel 10 is capable of turning around the left kingpin shaft 16. As shown in FIG. 3, the left kingpin shaft 16 is arranged so as to be in a slightly backwardly tilted orientation. In this embodiment, the left kingpin shaft 16 is parallel to the steering transmission shaft 6.

As shown in FIG. 3, a left knuckle arm 17 is attached to the rear part of the left knuckle member 11. The left knuckle arm 17 is disposed so as to protrude rearwardly from the left knuckle member 11. In other words, in the left knuckle member 11, a brake caliper support part is formed forward to the left kingpin shaft 16 (in other words, an axle of the left front wheel 10) and a knuckle arm support part is formed rearward to the left kingpin shaft 16. With the steering transmission shaft 6 being inclined, the knuckle arm support part is located lower than the brake caliper support part.

The left knuckle arm 17 is connected to the aforementioned steering drive arm 36 via a left tie rod (first rod) 18. Accordingly, the steering drive arm 36 pushes and pulls the left knuckle arm 17 via the left tie rod 18 to turn the left knuckle member 11 and the left front wheel 10.

Specifically, when the steering drive arm 36 moves to the right side with respect to the center of the vehicle body due to steering by the driver, the steering drive arm 36 moves away from the left knuckle arm 17. In this case, the steering drive arm 36 pulls the left knuckle arm 17 via the left tie rod 18. The left front wheel 10 changes its direction around the left kingpin shaft 16 together with the left knuckle member 11 and the front end of the left front wheel 10 faces left.

On the other hand, when the steering drive arm 36 moves to the left side with respect to the center of the vehicle body due to steering by the driver, the steering drive arm 36 approaches the left knuckle arm 17. In this case, the steering drive arm 36 pushes the left knuckle arm 17 via the left tie rod 18. The left front wheel 10 changes its orientation around the left kingpin shaft 16 together with the left knuckle member 11 and the front end of the left front wheel 10 faces right.

Since the configuration of the front part of the vehicle is substantially symmetrical, the configuration with respect to the right front wheel 20 will be briefly described below. As shown in FIG. 6 and the like, on the right side of the front of the three-wheeled bicycle 1, a right knuckle member (second knuckle member) 21, a right brake 22, and a right link 25 are disposed, in addition to the right front wheel 20. The right brake 22 includes a right brake disc 53 and a right brake caliper (second brake caliper, brake caliper) 54. The right link 25 includes a right kingpin shaft (second turning shaft) 26. As shown in FIG. 3, a right knuckle arm 27 is mounted at the rear of the right knuckle member 21. The right knuckle arm 27 is connected to the steering drive arm 36 via a right tie rod (second rod) 28.

As shown in FIG. 2, the lean mechanism 40 is disposed in front of the frame 3. The lean mechanism 40 is disposed forward of the front cylinder part 76. The lean mechanism 40 is configured as a parallel link mechanism. As shown in FIG. 5 and the like, the lean mechanism 40 has an upper link 41, a lower link 42, the left link (first side link) 15, the right link (second side link) 25.

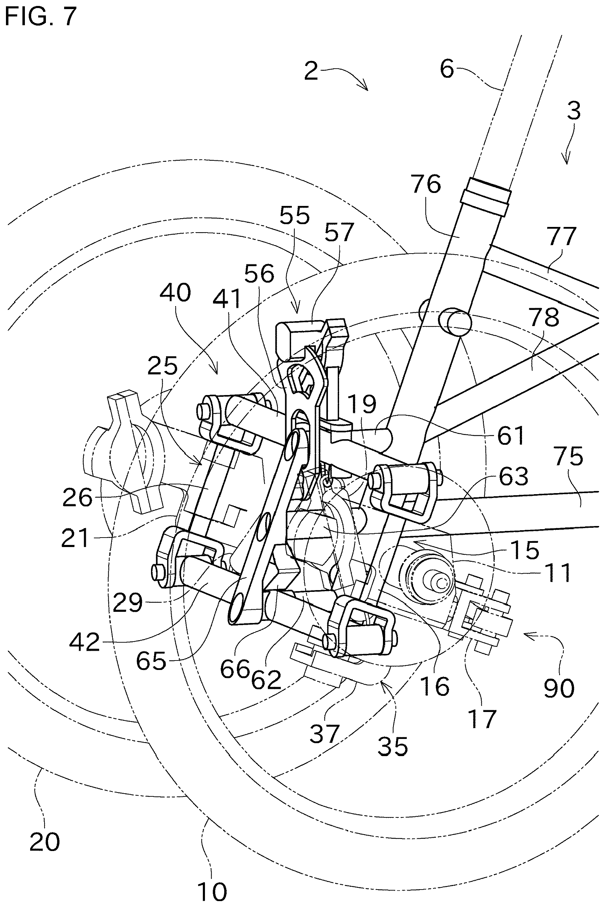

As shown in FIG. 7, the front cylinder part 76 provided by the frame 3 includes an upper support shaft 61 and a lower support shaft 62. A connecting part 63 is provided at a position between the upper support shaft 61 and the lower support shaft 62. In FIG. 3, the upper support shaft 61, the lower support shaft 62, and the connecting part 63 are omitted. As shown in FIG. 7, the upper support shaft 61, the lower support shaft 62, and the connecting part 63 are all formed elongated in the front-rear direction and are directed so as to project horizontally forward from the front cylinder part 76. The directions in which the upper support shaft 61, the lower support shaft 62, and the connecting part 63 project are parallel. An appropriate interval is spaced between the upper support shaft 61 and the lower support shaft 62.

The vertical distance between the upper support shaft 61 and the connecting part 63 is set to be equal to the vertical distance between the lower support shaft 62 and the connecting part 63. The upper support shaft 61 projects forward from the front surface of the front cylinder part 76 at a position corresponding to the connection position between the front cylinder part 76 and the second cross tube 78. The connecting part 63 projects forward from the front surface of the front cylinder part 76 at a position corresponding to the connection position between the front cylinder part 76 and the down tube 75. The lower support shaft 62 projects forward from the front surface of the front cylinder part 76 at a position corresponding to the steering drive arm 36.

Each of the upper link 41 and the lower link 42 is an elongated straight member. As shown in FIG. 6, the length of the upper link 41 and the length of the lower link 42 are substantially equal. In the state where the vehicle body 2 is upright, the upper link 41 and the lower link 42 are oriented in the left-right horizontal direction in the front view. The center part in the left-right direction of the upper link 41 is rotatably supported at the front end of the upper support shaft 61 around an axis which is oriented in the front-rear direction. The center part in the left-right direction of the lower link 42 is rotatably supported at the front end of the lower support shaft 62 around an axis which is oriented in the front-rear direction.

The left tie rod 18 and the right tie rod 28 are located at about the same height as the lower link 42 and rearward to the lower link 42. In other words, in the reference state shown in FIG. 6, at least a part of the left tie rod 18 and the right tie rod 28 are arranged to be hidden behind the lower link 42 in the front view. This allows the left tie rod 18 and the right tie rod 28 to be protected from collisions with foreign objects.

The left end of the upper link 41 and the left end of the lower link 42 are interconnected by the left link 15. The right end of the upper link 41 and the right end of the lower link 42 are interconnected by the right link 25. In the state where the vehicle body 2 is upright, the left link 15 and the right link 25 are oriented vertically in the front view.

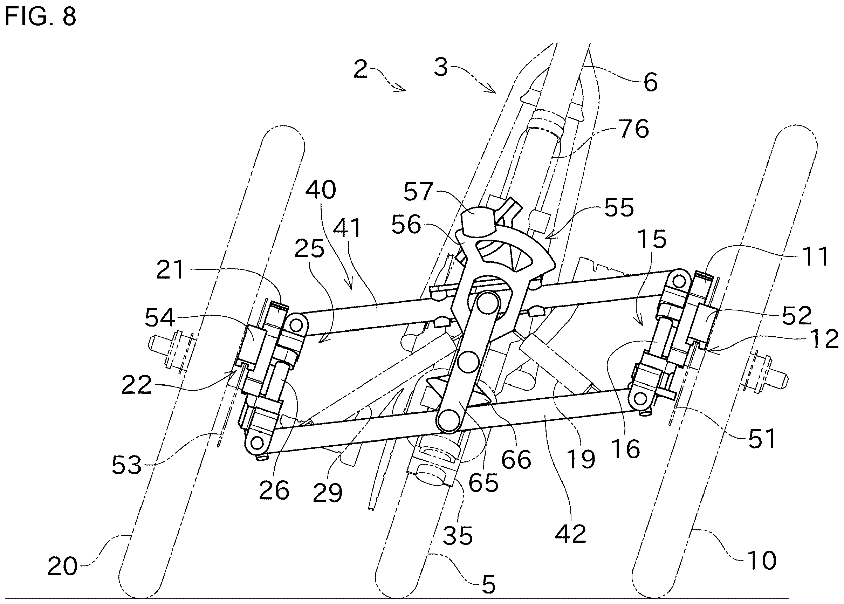

The lean mechanism 40 operates such that the posture of the frame 3, the posture of the left link 15, and the posture of the right link 25 are always parallel in the front view. In other words, in the front view, the postures of the left kingpin shaft 16 and the right kingpin shaft 26 are always parallel to the posture of the frame 3. Therefore, as shown in FIG. 8, for example, the left front wheel 10 and the right front wheel 20 can be leaned with respect to the road surface in conjunction with the vehicle body 2 (the frame 3) leaning left and right with respect to the road surface in the front view.

The fixing member 65 is an elongated member in the up-down direction in the front view, as shown in FIG. 6 and the like. The fixing member 65 is disposed at the center of the lean mechanism 40 in the vehicle width direction. As shown in FIG. 7, the fixing member 65 is fixed to the front ends of the upper support shaft 61, the lower support shaft 62, and the connecting part 63. This allows the rigidity of the part supporting the upper link 41 and the lower link 42 to be increased. The fixing member 65 is disposed parallel to the front cylinder part 76.

A restriction member 66 is fixed to a surface of the lower part of the fixing member 65. As shown in FIG. 3 and the like, the restriction member 66 is proximate above the center part in the left-right direction of the lower link 42. As shown in FIG. 6, the lower part of the restriction member 66 is formed in a V shape that is symmetrical in the front view. When the lower link 42 rotates and reaches a predetermined restriction angle, it contacts the V-shaped surface of the restriction member 66. As a result, the operation angle range of the lean mechanism 40 described above can be restricted. The contact between the restriction member 66 and the lower link 42 can be a point contact, a line contact, or a surface contact. In the case of a line contact or a surface contact, the load at the time of the contact can be prevented from being concentrated at one point.

For example, as shown in FIG. 3, a pair of lean return springs 19, 29 are disposed so as to connect the vicinity of a center of rotation of the upper link 41 to a position remote from a center of rotation of the lower link 42. The lean return springs 19, 29 are configured as tensile coil springs. As can be seen by comparing FIGS. 6 and 8, when the vehicle body 2 leans from an upright posture to either the left or right, the four-sided shape formed by the parallel links of the lean mechanism 40 is deformed. As a result, the tension of one of the two lean return springs 19, 29 is strengthened and the tension of the other is loosened. The lean return spring whose tension is strengthened (the right side lean return spring 29 in the example of FIG. 8) applies a stronger restoration force to the lean mechanism 40 than the opposite side. This makes it easier to return the vehicle body 2 to an upright posture.

As shown in FIG. 9, the lower link 42 has a plurality of parts spaced apart and aligned in the vehicle width direction that can hook the lean return springs 19, 29. The length of the lean return springs 19, 29 in the upright state of the vehicle body 2 can be changed by selecting a position to attach the lean return springs 19, 29. With this configuration, the magnitude of the restoration force generated by the lean return springs 19, 29 can be adjusted.

A lean brake 55 is disposed at the upper part of the lean mechanism 40. The lean brake 55 includes a brake plate 56 and a brake caliper 57.

The brake plate 56 is fixed on the side of the frame 3 and the brake caliper 57 is fixed on the side of the upper link 41. Accordingly, when the vehicle body 2 leans, the brake caliper 57 rotates relative to the brake plate 56. By braking this relative rotation, the lean brake 55 can make the vehicle body 2 less likely to lean. By strongly operating the lean brake 55, the leaning of the vehicle body 2 can also be prevented (locked).

In the present embodiment, the front cylinder part 76 is arranged to be inclined rearwardly as it proceeds upwardly. Accordingly, the space above the upper link 41 can be formed wider, and the brake caliper 57 can be arranged more easily. In addition, by arranging the brake caliper 57 above the upper link 41, it is possible to suppress foreign objects such as pebbles from colliding with the brake caliper 57.

Next, the luggage basket 9 will be described. As shown in FIG. 1, the luggage basket 9 is located in front of the frame 3, in the center of the vehicle width. A part of the luggage basket 9 is inserted between the left front wheel 10 and the right front wheel 20.

As shown in FIG. 2, in the state where the vehicle body 2 is upright, the lower end of the luggage basket 9 is lower than the axles of the left front wheel 10 and the right front wheel 20. This allows the position of the luggage basket 9 to be lowered, and a low center of gravity can be achieved. In addition, the luggage basket 9 can be easily fixed to the front cylinder part 76 which is in a low position as described above.

Since the luggage basket 9 is fixed to the front cylinder part 76, when the vehicle body 2 leans, the luggage basket 9 leans as well. The height of the lower end of the luggage basket 9 is determined so that the luggage basket 9 does not contact the road surface even when the vehicle body 2 leans to the maximum lean angle determined by the aforementioned restriction member 66. As a result, damage to the luggage basket can be prevented.

The front end of the luggage basket 9 is located forward of the front ends of the front wheels 10, 20. This allows the capacity of the luggage basket 9 to be easily increased.

As shown in FIG. 5, the luggage basket 9 is configured to be slightly elongated in the up-down in the front view. In the state where the vehicle body 2 is upright, the left and right ends of the luggage basket 9 are located inwardly from the left link 15 and the right link 25 that the lean mechanism 40 has, in the front view. This provides space for the left front wheel 10 and the right front wheel 20 to lean and turn.

As shown in FIG. 9, stowage space is formed inside the luggage basket 9 that is open above. This stowage space is recessed so that the rear lower part is cut out in a side view. The lean mechanism 40 and the lean brake 55 are arranged in this part. In other words, the lean mechanism 40 and the lean brake 55 are arranged in the space sandwiched in front and rear by the stowage space of the luggage basket 9 and the front cylinder part 76 of the frame 3. This makes it possible to realize a compact arrangement as a whole.

The luggage basket 9 is disposed such that it faces forward and above the lean mechanism 40 and the lean brake 55. This allows the capacity of the luggage basket 9 to be increased while preventing interference with the lean mechanism 40 and the lean brake 55. The part of the luggage basket 9 that faces above the lean mechanism 40 is disposed at a position higher than the movable range of the upper link 41. Therefore, the luggage basket 9 does not interfere with the operation of the lean mechanism 40.

As shown in FIG. 9, at the upper part of the front cylinder part 76, a pair of first bosses 91 are disposed on the left and right sides. At the lower part of the front cylinder part 76, a pair of second bosses 92 are disposed on the left and right sides. Each of the first bosses 91 and the second bosses 92 is integrally formed so as to protrude in a left-right horizontal direction from the front cylinder part 76.

The luggage basket 9 is composed of a plurality of wire members made of thin bars of metal that are bent as appropriate. Some of these wire members extend rearwardly from the aforementioned stowage space and are disposed along the front cylinder part 76. The wire member is fixed to the first bosses 91 and the second bosses 92 via stays 93 which are arranged in pairs on the left and right sides. The above allows the luggage basket 9 to be fixed to the front cylinder part 76.

In a side view, some of the wire members are bent to encompass the front, top, and rear of the lean mechanism 40 and the lean brake 55. A part of the wire member that is located rearward to the lean mechanism 40 is attached to the front cylinder part 76 via the stays 93. The wire member is disposed so as to pass between the stowage space of the luggage basket 9 and the lean brake 55. Accordingly, the luggage in the luggage basket 9 can be prevented from contacting the lean brake 55.

Next, the steering link mechanism 90 will be described.

As shown in FIG. 3, the steering drive arm 36 and the left knuckle arm 17 are connected to each other by the left tie rod 18. The steering drive arm 36 and the right knuckle arm 27 are connected to each other by the right tie rod 28. Thereby, the left front wheel 10 and the right front wheel 20 can be turned according to the rotation of the handle 7. FIG. 9 shows the state in which the handle 7 is turned to the left.

As shown in FIG. 3, in a side view, the left tie rod 18 and the right tie rod 28 are disposed behind the front cylinder part 76 and below the down tube 75.

The steering bracket 35 is an L-shaped member in a side view. As shown in FIG. 3, the steering bracket 35 includes a base part 37 and an arm part 38. The base part 37 is disposed below the lower end surface of the front cylinder part 76. The base part 37 is fixed to the lower end of the steering transmission shaft 6. The arm part 38 is formed to extend upwardly from the rear part of the base part 37 parallel to a center of rotation 6c of the steering transmission shaft 6. The steering drive arm 36 described above is disposed at the rear of the upper part of the arm part 38.

This results in a layout in which the operating force applied to the handle 7 is transmitted through the steering transmission shaft 6 and the steering bracket 35 to pass through the lower end 76b of the front cylinder part 76, and then is transmitted to the steering drive arm 36 at a position slightly higher than the lower end 76b and behind the front cylinder part 76. This allows the position of the lower end 76b of the front cylinder part 76 to be lowered. As a result, a low center of gravity of the frame 3 can be realized, and it also becomes easy to install the lean mechanism 40 and the like lower. On the other hand the steering link mechanism 90 can be installed higher than the lower end 76b of the front cylinder part 76. Therefore, the steering link mechanism 90 is less likely to be damaged by protrusions on the ground or the like.

The steering drive arm 36 is rotatable about an axis perpendicular to the center of rotation 6c of the steering transmission shaft 6. The left knuckle arm 17 is rotatable about an axis perpendicular to the left kingpin shaft 16. The right knuckle arm 27 is rotatable around an axis perpendicular to the right kingpin shaft 26. As described above, the steering drive arm 36, the left knuckle arm 17, and the right knuckle arm 27 function as a substantially free joint. Accordingly, even when the steering transmission shaft 6, the left kingpin shaft 16, and the right kingpin shaft 26 are leaned as the vehicle body 2 is leaned, the left tie rod 18 and the right tie rod 28 can be appropriately pushed and pulled to turn the left knuckle member 11 and the right knuckle member 21 in conjunction with the rotation of the steering bracket 35.

As shown in FIG. 9, a steering restriction member 39 is attached to the arm part 38 of the steering bracket 35. The steering restriction member 39 is disposed between the front cylinder part 76 and the arm part 38. The steering restriction member 39 is formed so as to be arc-shaped when viewed along the center of rotation 6c of the steering transmission shaft 6. When the steering bracket 35 rotates to some extent, an end part of the steering restriction member 39 contacts one of the left and right second bosses 92. As a result, the steering angle range of the handle 7 (in other words, the turning angle range of the left front wheel 10 and the right front wheel 20) can be restricted. Accordingly, the left front wheel 10 and the right front wheel 20 can be prevented from interfering with the luggage basket 9 which is located in the inner side of the vehicle width direction.

The upper end surface of the arm part 38 is located below the lower surface of the down tube 75. The arm part 38 is disposed in a position where it is partially hidden by the front cylinder part 76 in a front view in the steering neutral state of the steering handle 7. This allows the arm part 38 to be protected from collisions with obstacles.

The arm part 38 is disposed with respect to the front cylinder part 76 at a radial distance from the front cylinder part 76. This prevents interference between the arm part 38 and the frame 3 when the arm part 38 rotates with the steering transmission shaft 6. Specifically, the arm part 38 can prevent interference with the second bosses 92 formed in the front cylinder part 76 and projecting in the vehicle width direction.

As shown in FIG. 9, the left tie rod 18 and the right tie rod 28 which constitute the steering link mechanism 90 are arranged so as to form a V-shape in plan view as a whole. The left tie rod 18 and the right tie rod 28 are arranged so as to pass through a space rearward from the center of rotation 6c of the steering transmission shaft 6 to the left and right. The upper link 41, lower link 42, and other links which constitute the lean mechanism 40 are disposed forward of the center of rotation 6c of the steering transmission shaft 6 (in other words, the front cylinder part 76). This allows the steering link mechanism 90 to be arranged while easily avoiding interference with the lean mechanism 40 and the like.

The left tie rod 18 and the right tie rod 28 are located rearwardly from the axles of the left front wheel 10 and the right front wheel 20. On the other hand, the left brake caliper 52 and the right brake caliper 54 are located forward of the axles of the left front wheel 10 and the right front wheel 20. As a result, the steering link mechanism 90, the left brake 12, and the right brake 22 can be compactly arranged as a whole.

Next, various operation members attached to the handle 7 will be described.

As shown in FIG. 1, a rear brake lever 44 is supported on the left portion of the handle 7. A transmission wire is connected to the rear brake lever 44. The transmission wire is connected to a rear brake (not shown) for braking the rear wheel 5. By the driver operating the rear brake lever 44 with his left hand so as to bring it close to the grip of the handle 7, the rear brake lever 44 is switched from a release position to a brake position. By operating the rear brake lever 44 to the brake position, the rear brake can be operated to brake the rear wheel 5. The rear brake may include, for example, but is not limited to, a brake disc and a brake caliper similar to the left brake 12.

A front brake lever 45 is supported on the right part of the handle 7. Two transmission wires are connected to the front brake lever 45. One of the two transmission wires is connected to the left brake caliper 52, and the other is connected to the right brake caliper 54. By the driver operating the front brake lever 45 with his right hand so as to bring it close to the grip of the handle 7, the front brake lever 45 is switched from the release position to the brake position. By operating the front brake lever 45 to the brake position, the left brake 12 and the right brake 22 can be operated simultaneously to brake the left front wheel 10 and the right front wheel 20.

As shown in FIG. 9, a lean brake lever 46 is supported on the left portion of the handle 7. A transmission wire is connected to the lean brake lever 46. The transmission wire is connected to the brake caliper 57 of the lean brake 55. By the driver operating the lean brake lever 46 so as to bring it close to the grip of the handle 7, the lean brake lever 46 is switched from the release position to the brake position. By operating the lean brake lever 46 to the brake position, a brake can be performed so as not to change the lean angle of the left front wheel 10 and the right front wheel 20.

As mentioned above, the lean angles of the left front wheel 10 and the right front wheel 20 relative to the road surface correspond to the lean angle of the vehicle body 2 relative to the road surface. Therefore, locking the lean of the left front wheel 10 and the right front wheel by the lean brake lever 46 is synonymous with locking the posture (lean) of the vehicle body 2 with respect to the road surface.

The transmission wire is an elongated member having an inner wire and an outer tube and is flexible. Since the transmission wire has a known configuration, a detailed description is omitted.

Although not shown in the drawings, an operation member for operating the rotation/stop of the electric motor 87 is attached to the handle 7. An instrument (not shown) is provided on the steering transmission shaft 6 or the handle 7. The driver can check the state of charge of the battery 31 and the like by the instrument.

As described above, the three-wheeled bicycle 1 of the present embodiment includes the vehicle body 2, the left front wheel 10, the right front wheel 20, the lean mechanism 40, the handle 7, and the steering transmission shaft 6. The vehicle body 2 includes the frame 3. The left front wheel 10 is located on the left side in the vehicle width direction. The right front wheel 20 is located on the right side which is opposite to the left side in the vehicle width direction. The lean mechanism 40 leans the left front wheel 10 and the right front wheel 20 in the front view in conjunction with the vehicle body 2 leaning in the front view. The handle 7 is operated to turn the left front wheel 10 around the left kingpin shaft 16 located on the left side, and to turn the right front wheel 20 around the right kingpin shaft 26 located on the right side. The steering transmission shaft 6 rotates in conjunction with the operation of the handle 7. The frame 3 includes the front cylinder part 76 which supports the steering transmission shaft 6. In the state where the vehicle body 2 is upright, the lower end 76b of the front cylinder part 76 is disposed lower than the axles of the left front wheel 10 and the right front wheel 20. The three-wheeled bicycle 1 includes the steering bracket 35 that is partly positioned lower than the lower end 76b of the front cylinder part 76 and rotates integrally with the steering transmission shaft 6. The steering bracket 35 is connected to the left front wheel 10 and the right front wheel 20 via the steering link mechanism 90.

This allows the front cylinder part 76 to be disposed low in the three-wheeled bicycle 1, thereby lowering the center of gravity of the frame 3. As a result, the center of gravity of the vehicle body 2 can be lowered, and the stability of the three-wheeled bicycle 1 can be improved.

In the three-wheeled bicycle 1 of the present embodiment, the frame 3 includes the bottom cylinder part 71 and the down tube 75. The bottom cylinder part 71 supports the crank axle 81. The down tube 75 extends in a straight line from the crank axle 81 and connects to the front cylinder part 76.

This allows the bottom cylinder part 71 and the front cylinder part 76 to be rigidly connected. The down tube 75 can be disposed low so that the center of gravity of the frame 3 can be further lowered.

In the three-wheeled bicycle 1 of this embodiment, the frame 3 includes the first cross tube 77 that extends diagonally forward and upward from the bottom cylinder part 71 and connects to the front cylinder part 76.

This allows the mechanical strength of the frame 3 to be increased.

In the three-wheeled bicycle 1 of this embodiment, the vehicle body 2 includes the seat 8. The frame 3 includes the seat tube 72 and the second cross tube 78. The seat tube 72 extends from the bottom cylinder part 71 toward the seat 8. The second cross tube 78 extends diagonally forward and downward from the seat tube 72 and connects to the first cross tube 77 in an intersecting manner and to the front cylinder part 76.

This allows the bottom cylinder part 71 or the seat tube 72 to be connected to the front cylinder part 76 while forming a plurality of triangles. Therefore, the mechanical strength of the frame 3 can be effectively increased.

The three-wheeled bicycle 1 of this embodiment is provided with the battery 31 and the controller. The battery 31 supplies electric power to the electric motor 87 for assisting human power or self-propulsion. The controller controls the electric motor 87. The battery 31 is mounted to the down tube 75.

This allows the battery 31 to be positioned low, thereby lowering the center of gravity of the vehicle body 2.

In the three-wheeled bicycle 1 of this embodiment, the lean mechanism 40 includes the restriction member 66 that restricts the lean angle range of the left front wheel 10 and the right front wheel 20.

This prevents excessive leaning of the left front wheel 10 and the right front wheel 20.

The three-wheeled bicycle 1 of this embodiment includes one rear wheel 5. In a plan view, the center of gravity of the vehicle body 2 is located inside a triangle having the left front wheel 10, the right front wheel 20, and the rear wheel 5 as vertices.

This improves the stability of the vehicle body 2.

The three-wheeled bicycle 1 of this embodiment includes the luggage basket 9 that is fixed to the front cylinder part 76. The lean mechanism 40 is configured as the parallel link mechanism. The parallel link mechanism includes the left link 15 and the right link 25. The left link 15 is disposed on the left side and extends vertically in a front view. The right link 25 is disposed on the right side and extends vertically in the front view. In the front view, the luggage basket 9 is positioned between the left link 15 and the right link 25.

This allows the luggage basket 9 to be positioned low, thereby lowering the center of gravity of the vehicle body 2. In addition, the layout can be achieved in which it is easy to secure spaces on either side of the luggage basket 9 for the left front wheel 10 and the right front wheel 20 to lean to the left and right in front view.

In the three-wheeled bicycle 1 of the present embodiment, the steering link mechanism 90 includes the left tie rod 18 and the right tie rod 28. The left tie rod 18 pushes and pulls the left knuckle member 11 supporting the left front wheel 10 in order to turn the left front wheel 10. The right tie rod 28 pushes and pulls the right knuckle member 21 supporting the right front wheel 20 in order to turn the right front wheel 20. The left tie rod 18 and the right tie rod 28 are connected to the steering bracket 35 behind the center of rotation 6c of the steering transmission shaft 6.

As a result, the space around the front cylinder part 76 can be effectively utilized and the steering link mechanism 90 can be compactly arranged.

In the three-wheeled bicycle 1 of this embodiment, the left tie rod 18 is connected to the left knuckle member 11 which turns with the left front wheel 10. The left tie rod 18 is connected to the left knuckle member 11 at the position which is behind the axle of the left front wheel 10. The right tie rod 28 is connected to the right knuckle member 21 which turns with the right front wheel 20. The right tie rod 28 is connected to the left knuckle member 11 at the position which is behind the axle of the right front wheel 20. The three-wheeled bicycle 1 includes the left brake caliper 52 and the right brake caliper 54. The left brake caliper 52 brakes the left brake disc 51 that rotates integrally with the left front wheel 10. The right brake caliper 54 brakes the right brake disc 53 which rotates integrally with the right front wheel 20. The left brake caliper 52 is disposed forward of the axle of the left front wheel 10. The right brake caliper 54 is disposed forward of the axle of the right front wheel 20.

Accordingly, the left brake caliper 52, which constitutes the left brake 12, and the left tie rod 18 can be arranged in a front-to-rear distribution. The right brake caliper 54, which constitutes the right brake 22, and the right tie rod 28 can be arranged in a front-to-rear distribution. As a result, the compact configuration can be realized as a whole.

Although the preferred embodiment and the modifications of the present invention have been described above, the configurations described above may be modified as follows, for example.

The material and shape of the frame 3 can be modified in various ways. For example, any one or two of the down tube 75, the first cross tube 77, and the second cross tube 78 may be omitted. At least any of the down tube 75, the first cross tube 77, and the second cross tube 78 may be configured in a curved shape, for example, instead of a straight shape. The down tube 75 may be formed to be inclined upwardly or downwardly as it proceeds forwardly from the bottom cylinder part 71.

The down tube 75 may be connected to the lowest part of the front cylinder part 76.

The battery 31 may be fixed so that it rests on top of the down tube 75, for example.

The shape of the steering bracket 35 is optional. For example, the arm part 38 can be changed to a shape that extends downwardly along the steering transmission shaft 6 instead of extending upwardly along the steering transmission shaft 6.

The steering transmission shaft 6 may be made to protrude downwardly from the lower end of the front cylinder part 76, and the steering drive arm 36 may be mounted directly to this protruding part. In this case, the steering bracket 35 can be omitted.

The restriction member 66, which restricts the angular range of the lean mechanism 40, can be modified to be directly fixed to the front cylinder part 76, for example, instead of the fixing member 65.

The luggage basket 9 may be fixed, for example, to a part of the steering transmission shaft 6 that protrudes upwardly from the front cylinder part 76. The lower end of the luggage basket 9 may be higher than the upper ends of the left front wheel 10 and the right front wheel 20.

The luggage basket 9 disposed at the front part of the vehicle body 2 may be omitted.

The three-wheeled bicycle 1 may be converted to a four-wheeled bicycle having one rear wheel 5 on each of left and right sides.

Any one of the left brake 12 and the right brake 22 may be omitted, and the front brake lever 45 may be configured to operate only one front brake which is located on the left side or the right side.

The electric motor 87 as the drive source may be disposed at another position instead of the axle part of the rear wheel 5. For example, the electric motor 87 may be located at the part of the crank axle 81. The electric motor 87 may be disposed between the crank axle 81 and the axle of the rear wheel 5 in the front-rear direction.

In particular, in the part rearward to the crank axle 81, various structures may be used, such as those applied to existing bicycles.

The electric motor 87, the battery 31, the controller, and the like may be omitted, and the bicycle may be configured as a front two-wheeled bicycle that runs only by human power.

### DESCRIPTION OF THE REFERENCE NUMERALS

- 1: three-wheel type bicycle (front two-wheeled bicycle)
- 2: vehicle body
- 3: frame
- 5: rear wheel
- 6: steering transmission shaft
- 7: handle
- 8: seat
- 9: luggage basket
- 10: left front wheel (first front wheel)
- 15: left link (first side link)
- 16: left kingpin shaft (first turning shaft)
- 18: left tie rod (first rod)
- 20: right front wheel (second front wheel)
- 25: right link (second side link)
- 26: right kingpin shaft (second turning shaft)
- 28: right tie rod (second rod)
- 31: battery
- 35: steering bracket (steering rotation section)
- 40: lean mechanism
- 52: left brake caliper (first brake caliper)
- 54: right brake caliper (second brake caliper)
- 66: restriction member
- 71: bottom cylinder part (crank axle support part)
- 72: seat tube (seat support part)
- 75: down tube (first member)
- 76: front cylinder part
- 76b: lower end
- 77: first cross tube (second member)
- 78: second cross tube (third member)
- 81: crank axle
- 87: electric motor
- 90: steering link mechanism

## Claims

1. A front two-wheeled vehicle comprising:
a vehicle body including a frame;
a first front wheel located on a first side in a vehicle width direction;
a second front wheel located on a second side which is opposite to the first side in the vehicle width direction;
a lean mechanism that leans the first front wheel and the second front wheel in a front view in conjunction with the vehicle body leaning in the front view;
a handle to be operated to turn the first front wheel around a first turning shaft located on the first side and to turn the second front wheel around a second turning shaft located on the second side; and
a steering transmission shaft that rotates in conjunction with an operation of the handle, wherein
the frame comprises a front cylinder part that supports the steering transmission shaft,
in a state where the vehicle body is upright, a lower end of the front cylinder part is positioned lower than axles of the first front wheel and the second front wheel,
the front two-wheeled vehicle comprises a steering rotation section that is at least partially located below the lower end of the front cylinder part and rotates integrally with the steering transmission shaft, and
the steering rotation section is connected to the first front wheel and the second front wheel via a steering link mechanism.

2. The front two-wheeled vehicle according to claim 1, wherein
the frame comprises:
a crank axle support part supporting a crank axle; and
a first member extending in a straight line from the crank axle and connecting to the front cylinder part.

3. The front two-wheeled vehicle according to claim 2, wherein
the frame comprises a second member extending diagonally forward and upward from the crank axle support part and connecting to the front cylinder part.

4. The front two-wheeled vehicle according to claim 3, wherein
the vehicle body comprises a seat, and
the frame comprises:
a seat support part extending from the crank axle support part toward the seat; and
a third member extending diagonally forward and downward from the seat support part, intersecting and connecting with the second member and connecting with the front cylinder part.

5. The front two-wheeled vehicle according to any one of claims 2 to 4, comprising:
a battery that supplies electric power to an electric motor; and
a controller for controlling the electric motor, wherein
at least one of the battery and the controller is mounted to the first member.

6. The front two-wheeled vehicle according to any one of claims 1 to 5, wherein
the lean mechanism comprises a restriction member that restricts a lean angle range of the first front wheel and the second front wheel.

7. The front two-wheeled vehicle according to any one of claims 1 to 6, comprising
only one rear wheel, wherein
in a plan view, a center of gravity of the vehicle body is located inside a triangle having the first front wheel, the second front wheel, and the rear wheel as vertices.

8. The front two-wheeled vehicle according to any one of claims 1 to 7, comprising
a luggage basket that is fixed to the front cylinder part, wherein
the lean mechanism is configured as a parallel link mechanism,
the parallel link mechanism comprises:
a first side link disposed on the first side and extending vertically in the front view; and
a second side link disposed on the second side and extending vertically in the front view, and
in the front view, the luggage basket is positioned between the first side link and the second side link.

9. The front two-wheeled vehicle according to any one of claims 1 to 8, wherein
the steering link mechanism comprises:
a first rod that pushes and pulls a support of the first front wheel to turn the first front wheel; and
a second rod that pushes and pulls a support of the second front wheel to turn the second front wheel, and
the first rod and the second rod are connected to the steering rotation section behind a rotation center of the steering transmission shaft.

10. The front two-wheeled vehicle according to claim 9, wherein
the first rod is connected to a first knuckle member at a position which is behind the axle of the first front wheel, the first knuckle member turning with the first front wheel,
the second rod is connected to a second knuckle member at a position which is behind the axle of the second front wheel, the second knuckle member turning with the second front wheel,
the front two-wheeled vehicle comprises a brake caliper for braking a disc that rotates integrally with the first front wheel or the second front wheel, and
the brake caliper is disposed forward of the axle of the first front wheel or the second front wheel to which the disc is attached.
